# EUROPEAN PATENT APPLICATION

(11) **EP 4 421 597 A1**
(43) Date of publication of application: **28.08.2024**
(21) Application number: 23157992.1
(22) Date of filing: 22.02.2023
(51) Int. Cl.: G06F 3/041, G06F 3/044

(54) **TOUCH DEVICE AND ASSOCIATED CONTROL METHOD**

(71) Applicant: PowerView Display Corporation, Zhubei City, Hsinchu County 30265 (TW)
(72) Inventor: CHIEN, Cheng-Pang, 30265 Zhubei City, Hsinchu County (TW)
(74) Representative: dompatent von Kreisler Selting Werner - Partnerschaft von Patent- und Rechtsanwälten mbB

(57) **Abstract**

A touch device and associated control method are provided. The touch device includes a touch panel and a control circuit. The touch panel includes plural first driving electrodes, plural second driving electrodes, plural first sensing electrodes, and plural second sensing electrodes. The first sensing electrodes respectively conduct plural first capacitance sensing signals. The first capacitance sensing signals represent changes of plural first capacitances between the first driving electrodes and the first sensing electrodes. The second sensing electrodes respectively conduct plural second capacitance sensing signals. The second capacitance sensing signals represent changes of plural second capacitances between the second driving electrodes and the second sensing electrodes. The control circuit selectively generates a touchpoint coordinate based on the first capacitance sensing signals and the second capacitance sensing signals.

## Description

### TECHNICAL FIELD

The disclosure relates in general to a touch device and an associated control method, and more particularly to a capacitive touch device and an associated control method.

### BACKGROUND

Touch panels are widely used in electronic devices such as navigators, industrial terminals, consumer products, medical equipment, aircraft instrument, and so forth. As touch panels help users to operate the electronic devices in an efficient and user-friendly manner, the use of touch panels has become more and more popular.

The resistive touch panel was one of the most common touch panels used in industrial electronics because it is cost-effective. However, resistive touch panels are no longer popular as before because they do not support the multi-touch function. Therefore, the projected capacitance touch panels having multi-touch capability have become popular recently.

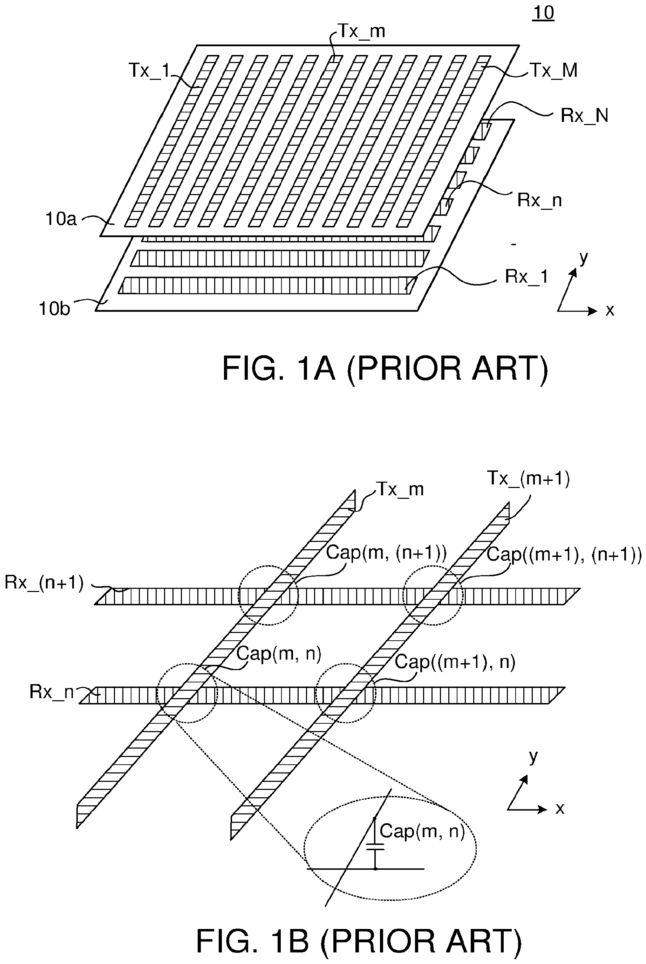

FIG. 1A is a schematic diagram illustrating an electrode matrix. The electrode matrix 10 includes a driving electrode plate 10a and a sensing electrode plate 10b. The driving electrode plate 10a and the sensing electrode plate 10b are overlapped and parallel to an x-y plane. The driving electrode plate 10a includes M driving electrodes (Tx_1~Tx_M), and the sensing electrode plate 10b includes N sensing electrodes (Rx_1∼Rx_N). The M driving electrodes (Tx_1~Tx_M) and the N sensing electrodes (Rx_1∼Rx_N) are perpendicular.

In the specification, variables m, n, M, N are used, and they are all positive integers. The variable M represents the total number of the driving electrodes (Tx_1~Tx_M), and the variable m represents an exemplary driving electrode (Tx_m) among the M driving electrodes (Tx_1 ~Tx_M). The variable N represents the total number of the sensing electrodes (Rx_1∼Rx_N), and the variable n represents an exemplary sensing electrode (Rx_n) among the N sensing electrodes (Rx_1~Rx_N). Therefore, the variable m is smaller than or equivalent to the variable M (m≤M), and the variable n is smaller than or equivalent to the variable N (n≤N).

For the sake of illustration, it is assumed that the M and N are even numbers, M driving electrodes (Tx_1~Tx_M) are arranged in parallel to the y-axis (first direction), and the N sensing electrodes (Rx_1~Rx_N) are arranged in parallel to the x-axis (second direction). In practical applications, the directions of the driving electrodes (Tx_1~Tx_M) and the sensing electrodes (Rx_1~Rx_N) are not limited.

The touch operation performed on the surface of the projected capacitance touch panel is detected by sensing the capacitance changes between the driving electrodes (Tx_1~Tx_M) and the sensing electrodes (Rx_1~Rx_N). The capacitances formed between two driving electrodes (Tx_m, Tx_(m+1)) and two sensing electrodes (Rx_n, Rx_(n+1)) are shown in FIG. 1B.

FIG. 1B is a schematic diagram illustrating capacitors are formed between the driving electrodes (Tx_m, Tx_(m+1)) and the sensing electrodes (Rx_n, Rx_(n+1)). In FIG. 1B, the driving electrodes (Tx_m, Tx_(m+1)) are represented with horizontal screentone, and the sensing electrodes (Rx_n, Rx_(n+1)) are represented with vertical screentone.

As a capacitance being sensed is related to a driving electrode and a sensing electrode, the capacitance is represented by a coordinate-based symbol. For example, the capacitance Cap(m, n) represents the capacitance formed between the driving electrode Tx_m and the sensing electrode Rx_n. When the position of the capacitance Cap(m, n) is triggered, the capacitance Cap(m, n) is changed in response. Accordingly, the capacitance change can be detected through the sensing electrode Rx_n. By time-division techniques, the position where the capacitance changes can be identified, and a touch operation can thus be sensed.

In the specification, the capacitance change being sensed by the touch controller is defined as a triggering event. Depending on the cause of the triggering event, the triggering event can be classified. For example, the triggering event caused by a touchpoint is defined as a touch triggering event, and the triggering event caused by static electricity is defined as a false triggering event.

The M driving electrodes (Tx_1~Tx_M) and the N sensing electrodes (Rx_1~Rx_N) jointly form M*N capacitances Cap(1, 1)~Cap(M, N), and the triggering event may occur at each of the M*N intersections between the M driving electrodes (Tx_1~Tx_M) and the N sensing electrodes (Rx_1~Rx_N). Through the sensing electrodes (Rx_1~Rx_N), the changes of the capacitors Cap(1, 1)~Cap(M, N) are sensed and transformed to coordinate data.

When the projected capacitance touch panel is used in a low-humidity environment, static electricity may result in capacitance change at the projected capacitance touch panel, and such phenomena become a false triggering event. For example, suppose that the static electricity is generated at the intersection between the m-th driving electrode Tx_m and the n-th sensing electrode Rx_n, the capacitance Cap(m, n) is changed accordingly, and the electronic device might perform an undesired operation based on the coordinate (m, n).

As the touch device might be used in various environments, randomly generated static electricity is unavoidable. In applications requiring high precision, such as medical equipment and aircraft pilot instruments, the error-prone issue caused by the false triggering event should be prevented.

### SUMMARY

The disclosure is directed to a touch device and an associated control method.

According to one embodiment, a touch device is provided. The touch device includes a touch panel and a control circuit. The touch panel includes first driving electrodes, second driving electrodes, first sensing electrodes, and second sensing electrodes. The first sensing electrodes conduct first capacitance sensing signals representing changes of first capacitances between the first driving electrodes and the first sensing electrodes. The second sensing electrodes conduct second capacitance sensing signals representing changes of second capacitances between the second driving electrodes and the second sensing electrodes. The control circuit is electrically connected to the touch panel. The control circuit receives the first capacitance sensing signals and the second capacitance sensing signals. Moreover, the control circuit selectively generates a touchpoint coordinate based on the first capacitance sensing signals and the second capacitance sensing signals.

According to another embodiment, an associated control method applied to a touch device is provided. The touch panel includes a control circuit and a touch panel having first driving electrodes, second driving electrodes, first sensing electrodes, and second sensing electrodes. The control method includes the following steps. Firstly, first capacitance sensing signals are conducted to the control circuit. The first capacitance sensing signals represent changes of first capacitances between the first driving electrodes and the first sensing electrodes. Second capacitance sensing signals are conducted to the control circuit. The second capacitance sensing signals represent changes of second capacitances between the second driving electrodes and the second sensing electrodes. A touchpoint coordinate is selectively generated based on the first capacitance sensing signals and the second capacitance sensing signals.

### BRIEF DESCRIPTION OF THE DRAWINGS

FIG. 1A (prior art) is a schematic diagram illustrating an electrode matrix.
FIG. 1B (prior art) is a schematic diagram illustrating capacitors are formed between the driving electrodes (Tx_m, Tx_(m+1)) and the sensing electrodes (Rx_n, Rx_(n+1)).
Fig. 2 is a schematic diagram illustrating the typical distribution pattern of intensity sensing signals corresponding to a touch triggering event.
Fig. 3A is a schematic diagram illustrating an electronic device according to the embodiment of the present disclosure.
Fig. 3B is a schematic diagram illustrating the signals and operations of the touch device.
FIGS. 4A and 4B are flow diagrams illustrating the control flow of the touch device in FIG. 3B.
FIG. 5A is a flow diagram illustrating details of step S311 in FIG. 4A.
FIG. 5B is a flow diagram illustrating details of step S313 in FIG. 4A.
FIG. 6A is a flow diagram illustrating details of step S393 in FIG. 4B.
FIG. 6B is a flow diagram illustrating details of step S395 in FIG. 4B.
FIGS. 7A and 7B are schematic diagrams illustrating the touch devices according to the embodiments of the present disclosure.

In the following detailed description, for purposes of explanation, numerous specific details are set forth in order to provide a thorough understanding of the disclosed embodiments. It will be apparent, however, that one or more embodiments may be practiced without these specific details. In other instances, well-known structures and devices are schematically shown in order to simplify the drawing.

### DETAILED DESCRIPTION

The projected capacitance touch panels have been developed to support the multi-touch function. The operation theory regarding how the coordinate data is calculated based on the capacitance change is not described. The present disclosure focuses on the determination logic to avoid the touch panel reporting the false triggering event to the main controller.

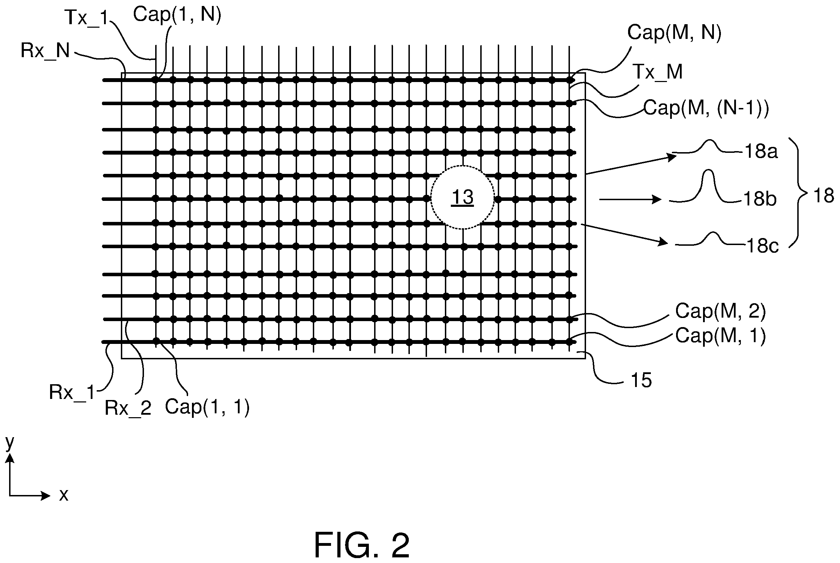

Fig. 2 is a schematic diagram illustrating the typical distribution pattern of intensity sensing signals corresponding to a touch triggering event. The M driving electrodes (Tx_1~Tx_M) are arranged in parallel to the y-axis, and the N sensing electrodes (Rx_1∼Rx_N) are arranged in parallel to the x-axis. There are M*N capacitances formed between the M driving electrodes (Tx_1~Tx_M) and the N sensing electrodes (Rx_1~Rx_N).

In FIG. 2, a touch position 13 is shown. The amplitudes of the waveforms 18a, 18b, 18c represent the intensities of the intensity sensing signals related to the sensing electrodes whose corresponding capacitances are affected by the touch position 13. The waveform 18b has the highest intensity, and this implies that the capacitance related to the sensing electrode, being closest to the center of the touch position 13, is affected by the touchpoint the most.

As the waveforms 18a, 18b are corresponding to the sensing electrodes, which are relatively close to the touch position 13, the intensities of which are higher than 0 (that is, the intensities of the intensity sensing signals). However, as the center of the touch position 13 does not cover the sensing electrodes corresponding to the waveforms 18a, 18c, the intensities of the waveforms 18a, 18c are lower than the intensity of the waveform 18b. The combination of the waveforms 18a, 18b, 18c can be considered as a typical distribution pattern corresponding to the touch triggering event.

The typical distribution pattern corresponding to a touch triggering event involves several intensity sensing signals. The intensity sensing signal induced by the sensing electrode closest to the center of the touchpoint has the highest intensity, and the intensities of the other intensity sensing signals are gradually decreased with the increment of the distance between the sensing electrode and the touchpoint. Alternatively speaking, the distribution of the intensity sensing signals should have a hill-like distribution pattern.

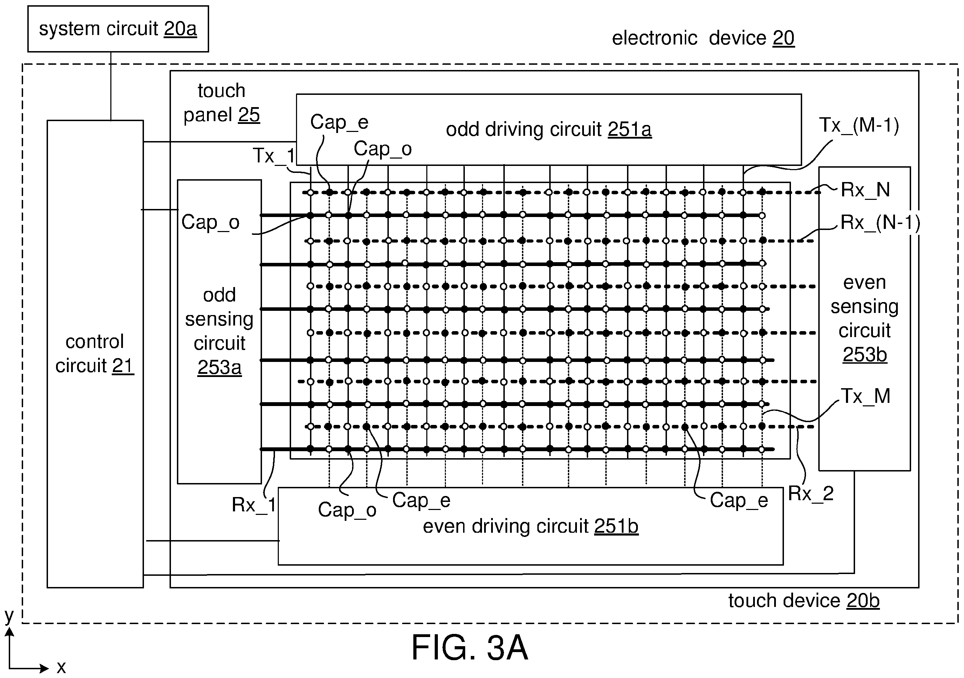

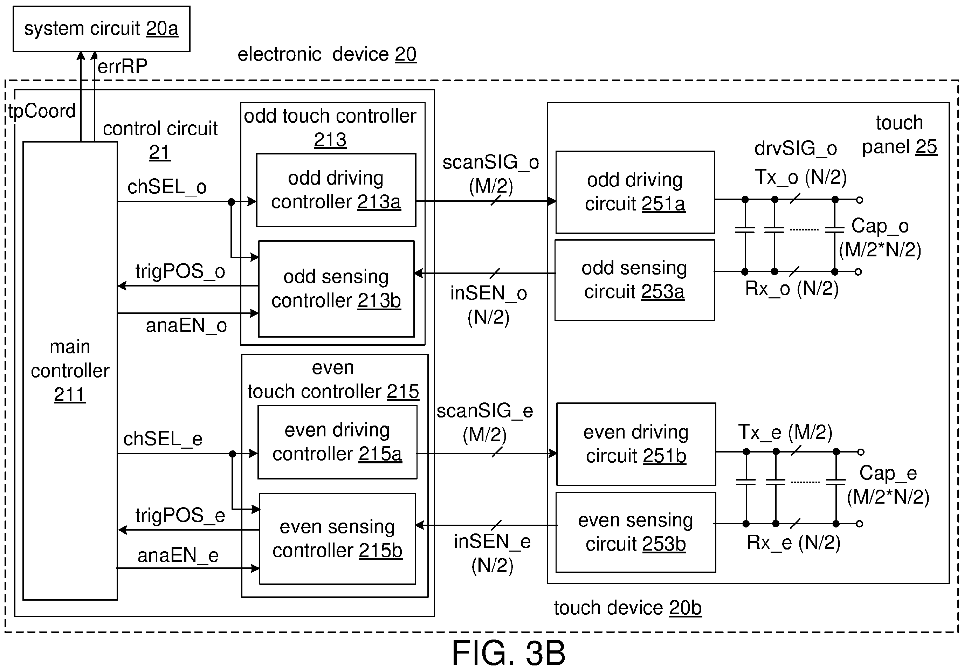

FIG. 3A is a schematic diagram illustrating an electronic device according to the embodiment of the present disclosure. The electronic device 20 includes a system circuit 20a and a touch device 20b, and the touch device 20b further includes a touch panel 25 and a control circuit 21. The system circuit 20a and the touch panel 25 are electrically connected to the control circuit 21. The touch panel 25 includes two driving circuits (odd driving circuit 251a, even driving circuit 251b) and two sensing circuits (odd sensing circuit 253a, even sensing circuit 253b). The connections between the touch panel 25 and the control circuit 21 are first described. The internal components and their related signals are illustrated in FIG. 3B.

In FIG. 3A, the odd driving electrodes (Tx_1, Tx_3, - Tx_(M-1)) and the odd sensing electrodes (Rx_1, Rx_3,~Rx_(N-1)) are drawn with solid lines. On the other hand, the even driving electrodes (Tx_2, Tx_4, ~ Tx_M) and the even sensing electrodes (Rx_2, Rx_4, ~ Rx_N) are drawn with dotted lines. The odd driving electrodes (Tx_o) and the even driving electrodes (Tx_e) are interleaved alternately, and the odd sensing electrodes (Rx_o) and the even sensing electrodes (Rx_e) are interleaved alternately.

The odd driving circuit 251a is electrically connected to the odd driving electrodes (Tx_1, Tx_3,~ Tx_(M-1)), and the even driving circuit 251b is electrically connected to the even driving electrodes (Tx_2, Tx_4,~ Tx_M). The odd sensing circuit 253a is electrically connected to the odd sensing electrodes (Rx_1, Rx_3,-Rx_(N-1)), and the even sensing circuit 253b is electrically connected to the even sensing electrodes (Rx_2, Rx_4, ~ Rx_N).

In FIG. 3A, an odd-channel and an even-channel are defined. The odd-channel is corresponding to the odd driving circuit 251a, the odd driving electrodes (Tx_1, Tx_3,~ Tx_(M-1)), the odd sensing electrodes (Rx_1, Rx_3, -Rx_(N-1)), and the odd sensing circuit 253a. The even-channel is corresponding to the even driving circuit 251b, the even driving electrodes (Tx_2, Tx_4, ~Tx_M), the even sensing electrodes (Rx_2, Rx_4, ~Rx_N), and the even sensing circuit 253b.

In the specification, capacitances formed between the odd driving electrodes (Tx_1, Tx_3,~Tx_(M-1)) and the odd sensing electrodes (Rx_1, Rx_3,~ Rx_(N-1)) are defined as odd capacitances (Cap_o). Therefore, the number of the odd capacitances (Cap_o) is equivalent to the product of half of the number of driving electrodes (M/2) times half of the number of sensing electrodes (N/2). That is, the number of odd capacitances (Cap_o) is equivalent to M/2*N/2.

Similarly, the capacitances formed between the even driving electrodes (Tx_2, Tx_4,~Tx_M) and the even sensing electrodes (Rx_2, Rx_4,~Rx_N) are defined as even capacitances (Cap_e). Moreover, the number of even capacitances (Cap_e) is equivalent to M/2*N/2.

In FIG. 3A, it is assumed that changes of the odd capacitances (Cap_o) and the even capacitances (Cap_e) are sensed. Therefore, only one-half of the M*N capacitances are sensed. The odd capacitances (Cap_o) and the even capacitances (Cap_e) are marked with black circles. On the other hand, changes of the capacitances formed between the odd driving electrodes (Tx_o) and the even sensing electrodes (Rx_e) and changes of the capacitances formed between the even driving electrodes (Tx_e) and the odd sensing electrodes (Rx_o), represented with white circles, are not conducted to any of the odd sensing circuit 253a and the even sensing circuit 253b. In practical applications, which of the capacitance changes are actually utilized for identifying the touch position is not limited.

Fig. 3B is a schematic diagram illustrating the signals and operations of the touch device. Unlike FIG. 3A, the layout of the electrode matrix is not shown in FIG. 3B. The components at the upper part of FIG. 3B are corresponding to the odd-channel and the components at the lower part of FIG. 3B are corresponding to the even-channel.

Moreover, the odd driving electrodes (Tx_1, Tx_3,~Tx_(M-1)) are represented with a generic symbol Tx_o, the odd sensing electrodes (Rx_1, Rx_3,-Rx_(N-1)) are represented with a generic symbol Rx_o, the even driving electrodes (Tx_2, Tx_4, ~Tx_M) are represented with a generic symbol Tx_e, and the even sensing electrodes (Rx_2, Rx_4, ~Rx_N) are represented with a generic symbol Rx_e.

The odd capacitances Cap_o are formed between the odd driving electrodes Tx_o and the odd sensing electrodes Rx_o, and the even capacitances Cap_e are formed between the even driving electrodes Tx_e and the even sensing electrodes Rx_e. The number of odd capacitances Cap_o and the number of even capacitances Cap_e are equivalent to M/2*N/2.

The internal components in the control circuit 21 and their connections are described. The control circuit 21 includes a main controller 211, an odd touch control 213, and an even touch-controller 215. The main controller 211 is electrically connected to the system circuit 20a, the odd touch controller 213, and the even touch controller 215.

The odd touch controller 213 includes an odd driving controller 213a and an odd sensing controller 213b. The odd driving controller 213a is electrically connected to the main controller 211 and the odd driving circuit 251a. The odd sensing controller 213b is electrically connected to the main controller 211 and the odd sensing circuit 253a.

The even touch-controller 215 includes an even driving controller 215a and an even sensing controller 215b. The even driving controller 215a is electrically connected to the main controller 211 and the even driving circuit 251b. The even sensing controller 215b is electrically connected to the main controller 211 and the even sensing circuit 253b.

The components in the odd-channel can be further classified into two branches, that is, an odd driving branch and an odd sensing branch. The odd driving branch includes the odd driving controller 213a, the odd driving circuit 251a, and the odd driving electrodes Tx_o. The odd sensing branch includes the odd sensing controller 213b, the odd sensing circuit 253a, and the odd sensing electrodes Rx_o.

In an odd-channel sensing procedure, some of the signals are gradually conducted from the main controller 211 to the odd driving electrodes Tx_o along the odd driving branch, and some of the signals are gradually conducted from the odd sensing electrodes Rx_o to the main controller 211 along the odd sensing branch.

The components in the even-channel can be further classified into two branches, that is, an even driving branch and an even sensing branch. The even driving branch includes the even driving controller 215a, the even driving circuit 251b, and the even driving electrodes Tx_e. The even sensing branch includes the even sensing controller 215b, the even sensing circuit 253b, and the even sensing electrodes Rx_e.

In an even-channel sensing procedure, some of the signals are gradually conducted from the main controller 211 to the even driving electrodes Tx_e along the even driving branch, and some of the signals are gradually conducted from the even sensing electrodes Rx_e to the main controller 211 along the even sensing branch.

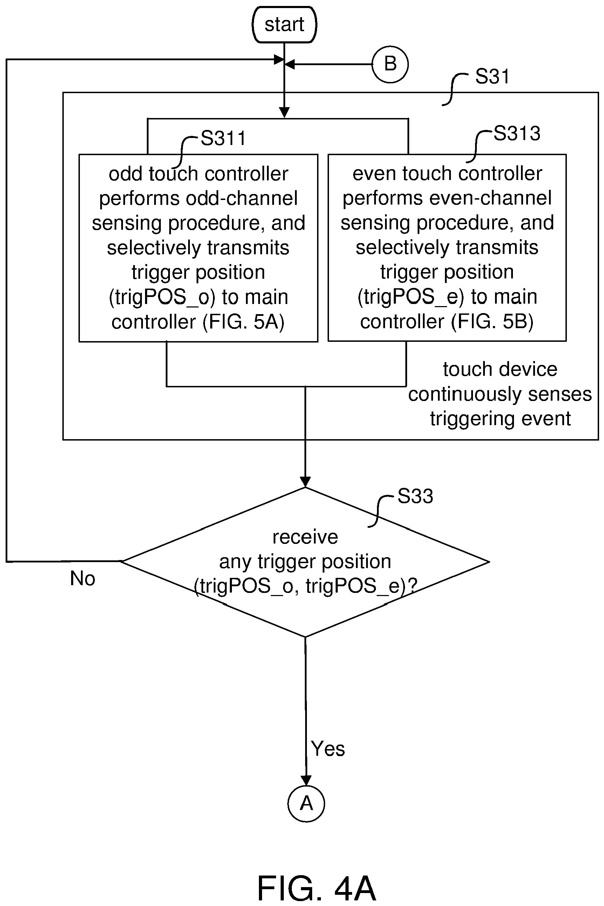

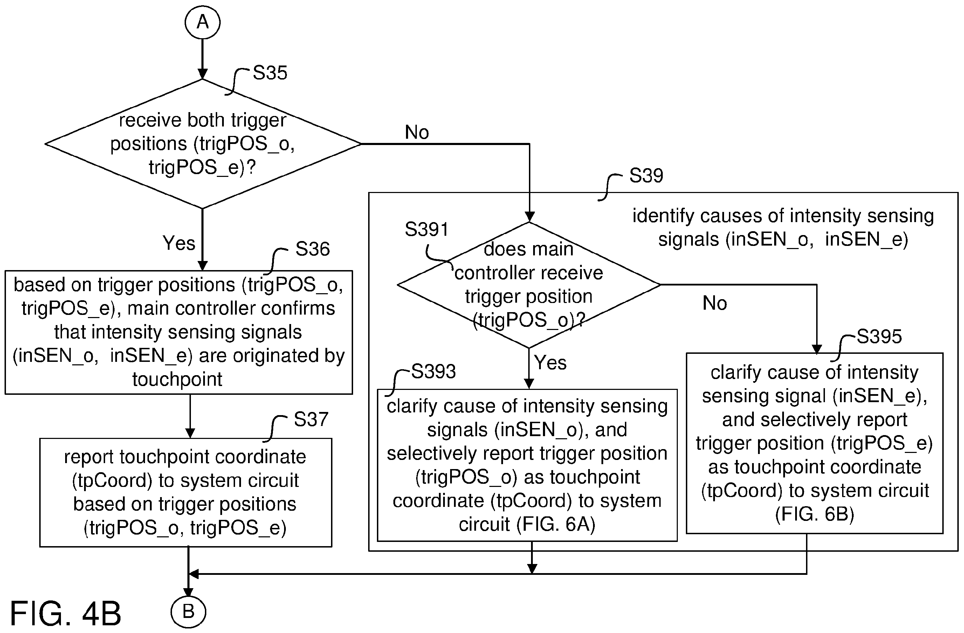

FIGS. 4A and 4B are flow diagrams illustrating the control method applied to the touch device in FIG. 3B. Please refer to FIGS. 3B, 4A, and 4B together.

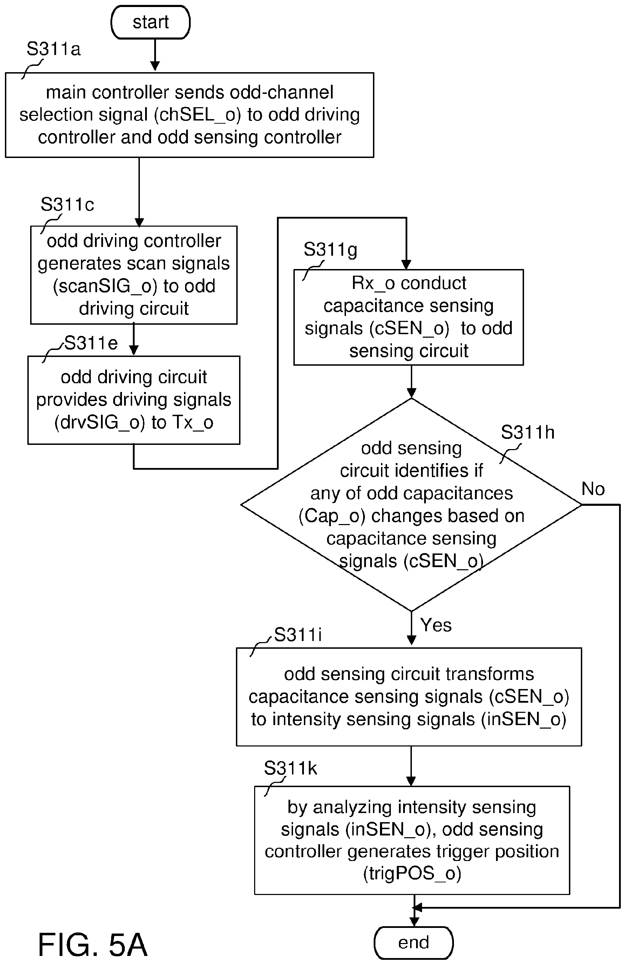

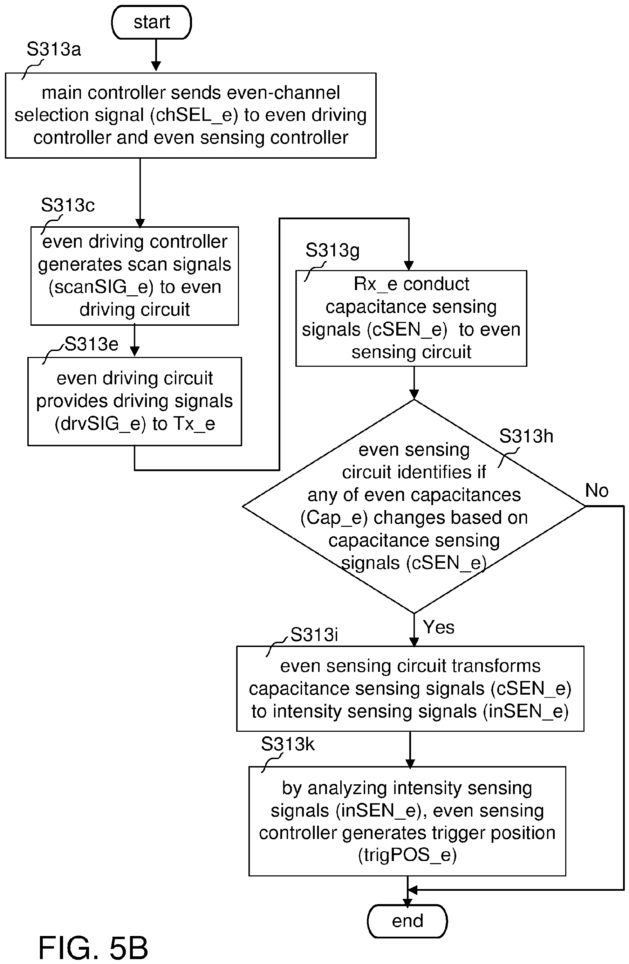

Firstly, the touch device 20b continuously senses the triggering event (step S31). Step S31 further includes steps S311, S313, and steps S311, S313 are performed parallelly. The odd touch controller 213 performs the odd-channel sensing procedure and selectively transmits a trigger position (trigPOS_o) to the main controller 211 (step S311). On the other hand, the even touch controller 215 performs the even-channel sensing procedure and selectively transmits another trigger position (trigPOS_e) to the main controller 211 (step S313). Details about steps S311, S313 can be referred to as FIGS. 5A and 5B, respectively.

After step S31, the main controller 211 determines if any trigger position (trigPOS_o, trigPOS_e) is received (step S33). If not, step S31 is repetitively performed.

If the determination result of step S33 is positive, the main controller 211 further clarifies if both trigger positions (trigPOS_o, trigPOS_e) are received (step S35). If so, the main controller 211 confirms that the intensity sensing signals (inSEN_o, inSEN_e) are originated by a touchpoint (step S36). In the specification, an actual touchpoint is defined as a touch triggering event. Later, a touchpoint coordinate (tpCoord) can be obtained based on the trigger positions (trigPOS_o, trigPOS_e). For example, one of the trigger positions (trigPOS_o, trigPOS_e) is selected as the touchpoint coordinate (tpCoord). Then, the main controller 211 reports the touchpoint coordinate (tpCoord) to the system circuit (step S37).

If the determination result of step S35 is negative, the main controller 211 identifies the causes of the intensity sensing signals (inSEN_o, inSEN_e) (step S39). Step S39 further includes the following steps.

The main controller 211 firstly determines if the trigger position (trigPOS_o) is received (step S391). Then, depending on which of the trigger positions (trigPOS_o, trigPOS_e) is received, one of steps 393, 395 is performed.

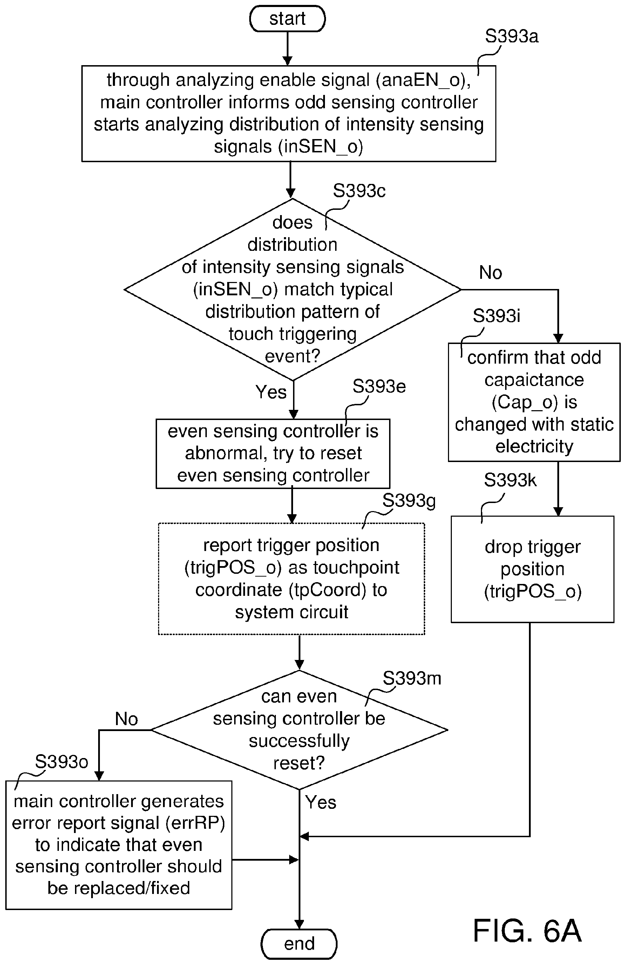

In the case that only the trigger position (trigPOS_o) is received, the main controller 211 clarifies the cause of the intensity sensing signal (inSEN_o), and it selectively reports the trigger position (trigPOS_o) as the touchpoint coordinate (tpCoord) to the system circuit 20a (step S393). More details about step S393 are described in FIG. 6A.

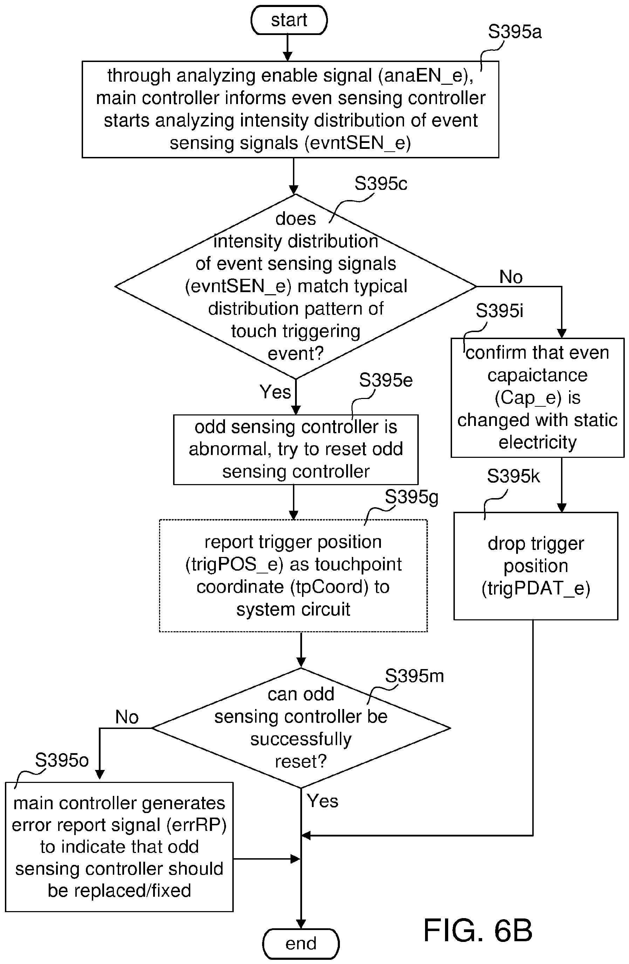

In the case that only the trigger position (trigPOS_e) is received, the main controller 211 clarifies the cause of the intensity sensing signals (inSIG_e), and it selectively reports the trigger position (trigPOS_e) as the touchpoint coordinate (tpCoord) to the system circuit 20a (step S395). More details about step S395 are described in FIG. 6B.

Please note that, the embodiments of the present disclosure focus on the determination logic made by the main controller 211, and the implementation of the position recognition of the triggering event and circuit design of the touch device can be varied in practical applications. For example, the odd/even driving circuit may include demultiplexers (hereinafter, DEMUX), and the odd/even sensing circuit may include multiplexers (hereinafter, MUX).

FIG. 5A is a flow diagram illustrating details of step S311 in FIG. 4A. Please refer to the odd-channel in FIG. 3B and FIG. 5A together.

The main controller 211 sends the odd-channel selection signal (chSEL_o) to the odd driving controller 213a and the odd sensing controller 213b (step S311a). Alternatively speaking, the odd-channel selection signal (chSEL_o) is utilized to enable the odd touch controller 213 to perform the odd-channel sensing procedure.

In response to the odd-channel selection signal (ChSEL_o), the odd driving controller 213a generates the scan signals (scanSIG_o) to the odd driving circuit 251a (step S311c). According to the scan signals (scanSIG_o), the odd driving circuit 251a generates and provides the corresponding driving signals (drvSIG_o) to the odd driving electrodes (Tx_o) (step S311e). The odd driving electrodes (Tx_o) conduct their corresponding driving signals (drvSIG_o) in a time-division manner.

The odd sensing electrodes (Rx_o) conduct the capacitance sensing signals (cSEN_o) to the odd sensing circuit 253a (step S311g). The capacitance sensing signals (cSEN_o) represent if any of the odd capacitances (Cap_o) is changed or affected by a triggering event.

The position recognition of the triggering event is related to the timing control of the main controller 211. For example, the n-th capacitance sensing signal can represent whether any of the positions of the capacitances related to the n-th capacitance sensing signal is triggered. With the alternatively generated driving signals (drvSIG_o), the exact position where the triggering event occurs can be identified.

By referring to the capacitance sensing signals (cSEN_o), the odd sensing circuit 253a identifies if any of the odd capacitances (Cap_o) is changed (step S311h). If not, the flow ends. Otherwise, the odd sensing circuit 253a transforms the capacitance sensing signal (cSEN_o) to the intensity sensing signal (inSEN_o), and the intensity sensing signals (inSEN_o) are transmitted to the odd sensing controller 213b (step S311i). By analyzing the intensity sensing signals (inSEN_o), the odd sensing controller 213b generates the trigger position (trigPOS_o) (step S311k).

FIG. 5B is a flow diagram illustrating the details of step S313 in FIG. 4A. Please refer to the even-channel in FIG. 3B and FIG. 5B together. As the generation of the trigger position (trigPOS_e) is symmetric with the generation of the trigger position (trigPOS_o), the flow diagrams as shown in FIGS. 5A and 5B are similar, and details about steps S313a, S313c, S313e, S313g, S313h, S313i, S313k are omitted.

FIG. 6A is a flow diagram illustrating the details of step S393 in FIG. 4B. In step S393, the main controller 211 clarifies the cause of the intensity sensing signals (inSEN_o), and it selectively reports trigger position (trigPOS_o) as touchpoint coordinate (tpCoord) to the system circuit 20a. Please refer to FIGS. 3B and 6A together.

Firstly, the main controller 211 transmits an odd analyzing enable signal (anaEN_o) to the odd sensing controller 213b. After receiving the odd analyzing enable signal (anaEN_o), the odd sensing controller 213b starts to analyze the distribution of the intensity sensing signals (inSEN_o) (step S393a). Then, the odd sensing controller 213b determines if the distribution of the intensity sensing signals (inSIG_o) matches the typical distribution pattern of the touch triggering event (step S393c).

If the determination result of step S393c is negative, the main controller 211 confirms that the intensity sensing signals (inSIG_o) are not caused by the touchpoint but by the disturbance of the static electricity (step S393i). Accordingly, the main controller 211 confirms that the triggering event is a false triggering event, and the trigger position (trigPOS_o) can be dropped (step S393k). Therefore, the disturbance of the static electricity does not affect the operation of the system circuit 20a.

A touch triggering event should generally result in generations of two trigger positions (trigPOS_o, trigPOS_e). However, the abnormality of the odd sensing controller 213b might be the reason why the trigger position (trigPOS_o) is not generated. Similarly, the abnormality of the even sensing controller 215b might be the reason why the trigger position (trigPOS_e) is not generated.

In the case that the distribution of the intensity sensing signals (inSIG_o) matches the typical distribution pattern of the touch triggering event, the main controller 211 confirms that the trigger position (trigPOS_o) is corresponding to the position of a touch triggering event. Meanwhile, this implies that the even sensing controller 215b does not generate the trigger position (trigPOS_e) in response to the touch triggering event, although it is supposed to do so. Therefore, the main controller 211 confirms that the even sensing controller 215b is abnormal when the determination result of step S393c is positive (step S393e). Then, the main controller 211 tries to reset the even sensing controller 215b. Optionally, the main controller 211 may report the trigger position (trigPOS_o) as the touchpoint coordinate (tpCoord) to the system circuit 20a (step S393g).

Then, the main controller 211 determines if the even sensing controller 215b can be successfully reset (step S393m). If the determination result of step S393m is positive, the flow ends. If the determination result of step S393m is negative, the main controller 211 generates an error report signal (errRP) to notify the system circuit 20a that even sensing controller 215b should be replaced/fixed (step S393o). Then, the user of the electronic device 20 can realize the abnormal state of the touch device 20b and proceed with adequate operations.

FIG. 6B is a flow diagram illustrating the details of step S395 in FIG. 4B. Please refer to FIGS. 3B and 6B together. As the cause analysis of the intensity sensing signal (inSEN_e) is symmetric with the cause analysis of the intensity sensing signal (inSEN_o), the flow diagrams as shown in FIGS. 6A and 6B are similar, and details about steps S395a, S395c, S395e, S395g, S395i, S395k, S395m, S395o are omitted.

The proposed embodiment demonstrates that the coordinate data acquired through the different channels (odd-channel and even-channel) are cross-referenced to identify the state of the touch panel 25. The concepts that the trigger positions (trigPOS_o, trigPOS_e) are cross-referenced and the distributions of intensity sensing signals (inSEN_o, inSEN_e) are compared with the typical distribution pattern of touch triggering event can be applied to different embodiments.

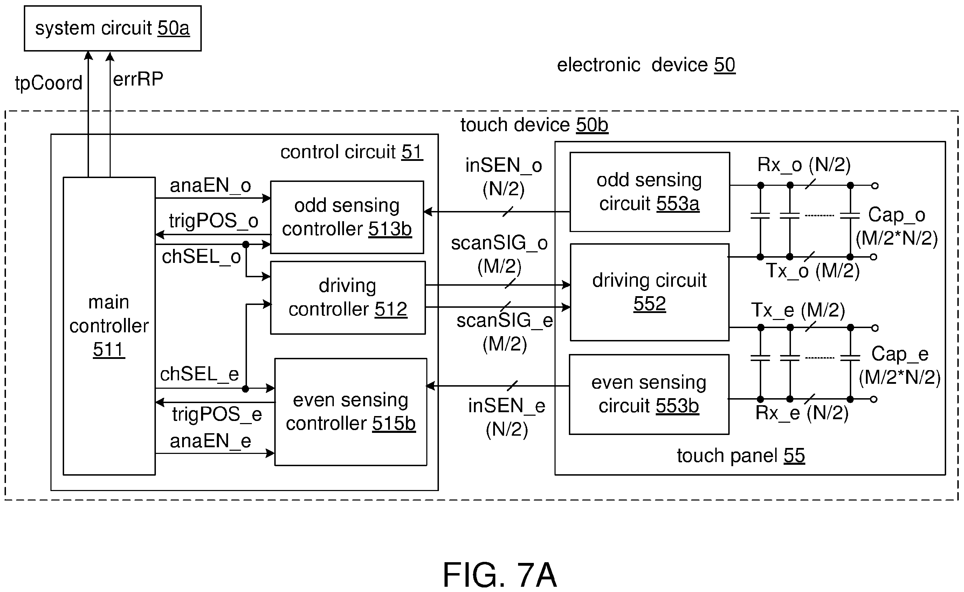

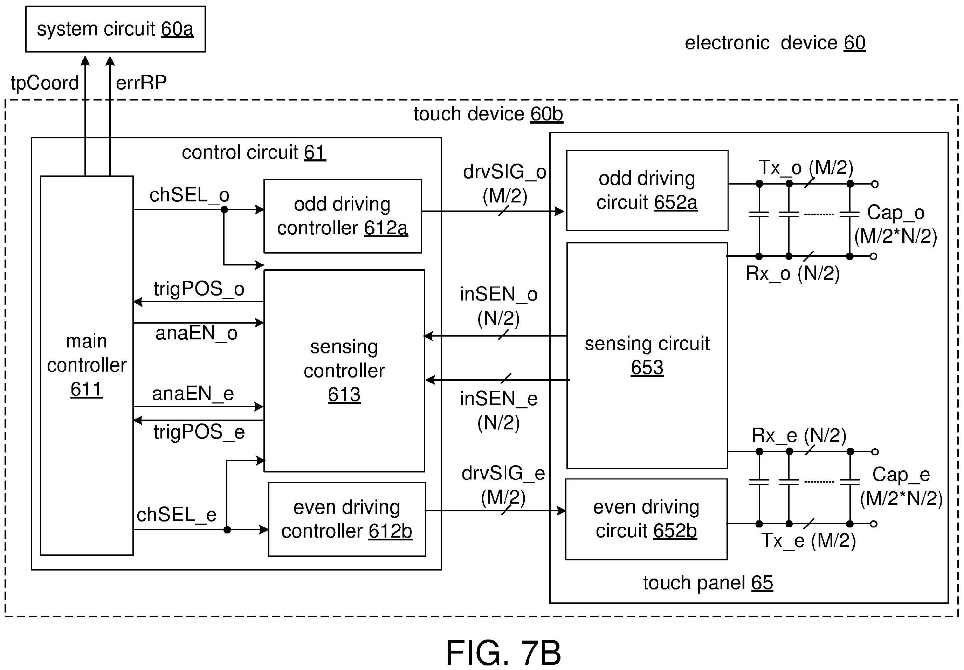

FIGS. 7A and 7B are schematic diagrams illustrating different touch devices according to the embodiments of the present disclosure. FIG. 7A shows an exemplary touch device having one merged driving branch and two separate sensing branches, and FIG. 7B shows an exemplary touch device having two separate driving branches, and one merged sensing branch.

In FIG. 7A, an electronic device 50 includes a system circuit 50a and a touch device 50b, and the touch device 50b includes a control circuit 51 and a touch panel 55. The control circuit 51 includes a main controller 511, an odd sensing controller 513b, a driving controller 512, and an even sensing controller 515b. The touch panel 55 includes an odd sensing circuit 553a, an even sensing circuit 553b, odd driving electrodes (Tx_o), even driving electrodes (Tx_e), odd sensing electrodes (Rx_o), and even sensing electrodes (Rx_e).

The driving controller 512 merges the functions of the odd driving controller 213a and the even driving controller 215a in FIG. 3B, and the driving circuit 552 merges the functions of the odd driving circuit 251a and the even driving circuit 251b in FIG. 3B. The operations and layout of the odd sensing controller 513b, the odd sensing circuit 553a, the even sensing controller 515b, and the even sensing circuit 553b are similar to those in FIG.2B.

In FIG. 7B, an electronic device 60 includes a system circuit 60a and a touch device 60b, and the touch device 60b includes a control circuit 61 and a touch panel 65. The control circuit 61 includes a main controller 611, an odd driving controller 612a, a sensing controller 613, and an even driving controller 612b. The touch panel 65 includes an odd driving circuit 652a, an even driving circuit 652b, a sensing circuit 653, odd driving electrodes (Tx_o), even driving electrodes (Tx_e), odd sensing electrodes (Rx_o), and even sensing electrodes (Rx_e).

The sensing controller 613 merges the functions of the odd sensing controller 213b and the even sensing controller 215b in FIG. 3B, and the sensing circuit 653 merges the functions of the odd sensing circuit 253a and the even sensing circuit 253b in FIG. 3B. The operations and layout of the odd driving controller 612a, the odd driving circuit 652a, the even driving controller 612b, and the even driving circuit 652b are similar to those in FIG. 3B.

By modifying steps S31 and S39, the flow diagrams described above can be applied to the touch devices 50b, 60b. Thus, the operations of the touch devices 50b, 60b are not repetitively described.

As described in the specification, the odd-channel sensing procedure and the even-channel sensing procedure are respectively performed, and the sensing results of which are compared and cross-referenced by the main controller. Based on the cross-comparison scheme, the abnormal condition, such as the components in one of the odd-channel and the even-channel, should be replaced/fixed, or the static electricity causes the triggering event can be clarified. The determination logic of the main controller is summarized in Table 1.

**Table 1**

| sensing result of odd-channel sensing procedure | sensing result of even-channel sensing procedure | | determination of main controller |
|---|---|---|---|
| trigger position (trigPOS_o) | trigger position (trigPOS_e) | | |
| N | N | no triggering event is generated | |
| Y | Y | triggering event represents touch triggering event. | |
| Y | N | ● | when the triggering event is confirmed to be the touch triggering event, the main controller confirms that the even sensing controller is abnormal |
| | | ● | when the triggering event is |
| | | | confirmed to be the false triggering event, the main controller ignores the triggering event |
| N | Y | ● | when the triggering event is confirmed to be the touch triggering event, the main controller confirms that the odd sensing controller is abnormal |
| | | ● | when the triggering event is confirmed to be the false triggering event, the main controller ignores the triggering event |

It will be apparent to those skilled in the art that various modifications and variations can be made to the disclosed embodiments. It is intended that the specification and examples be considered as exemplary only, with a true scope of the disclosure being indicated by the following claims and their equivalents.

## Claims

1. A touch device, comprising:
a touch panel (20b), comprising:
a plurality of first driving electrodes (Tx_o);
a plurality of second driving electrodes (Tx_e);
a plurality of first sensing electrodes (Rx_o), configured for conducting a plurality of first capacitance sensing signals (cSEN_o) representing changes of a plurality of first capacitances (Cap_o) between the plurality of first driving electrodes (Tx_o) and the plurality of first sensing electrodes (Rx_o); and
a plurality of second sensing electrodes (Rx_e), configured for conducting a plurality of second capacitance sensing signals (cSEN_e) representing changes of a plurality of second capacitances (Cap_e) between the plurality of second driving electrodes (Tx_e) and the plurality of second sensing electrodes (Rx_e); and
a control circuit (21), electrically connected to the touch panel (20b), configured for receiving the plurality of first capacitance sensing signals (cSEN_o) and the plurality of second capacitance sensing signals (cSEN_e) and selectively generating a touchpoint coordinate (tpCoord) based on the plurality of first capacitance sensing signals (cSEN_o) and the plurality of second capacitance sensing signals (cSEN_e).

2. The touch device according to claim 1, wherein the plurality of first driving electrodes (Tx_o) and the plurality of second driving electrodes (Tx_e) are parallel to a first direction (y-axis), and the plurality of first sensing electrodes (Rx_o) and the plurality of second sensing electrodes (Rx_e) are parallel to a second direction (x-axis).

3. The touch device according to claim 1, wherein
the plurality of first driving electrodes (Tx_o) and the plurality of second driving electrodes (Tx_e) are interleaved alternately, and
the plurality of first sensing electrodes (Rx_o) and the plurality of second sensing electrodes (Rx_e) are interleaved alternately.

4. The touch device according to claim 1, wherein the touch panel (20b) further comprises:
a first driving circuit (251a), electrically connected to the control circuit (21) and the plurality of first driving electrodes (Tx_o), configured for receiving a plurality of first scan signals (scanSIG_o) from the control circuit and transmitting a plurality of first driving signals (drvSIG_o) to the plurality of first driving electrodes (Tx_o); and
a second driving circuit (251b), electrically connected to the control circuit (21) and the plurality of second driving electrodes (Tx_e), configured for receiving a plurality of second scan signals (scanSIG_e) from the control circuit (21) and transmitting a plurality of second driving signals (drvSIG_e) to the plurality of second driving electrodes (Tx_e).

5. The touch device according to claim 4, wherein the control circuit (21) comprises:
a first driving controller (213a), electrically connected to the first driving circuit (251a), configured for generating the plurality of first scan signals (scanSIG_o) when a first channel selection signal (chSEL_o) is received; and
a second driving controller (215a), electrically connected to the second driving circuit (251b), configured for generating the plurality of second scan signals (scanSIG_e) when a second channel selection signal (chSEL_e) is received.

6. The touch device according to claim 1, wherein the touch panel (20b) further comprises:
a first sensing circuit (253a), electrically connected to the control circuit (21) and the plurality of first sensing electrodes (Rx_o), configured for generating a plurality of first intensity sensing signals (inSEN_o) based on the plurality of first capacitance sensing signals (cSEN_o); and
a second sensing circuit (253b), electrically connected to the control circuit (21) and the plurality of second sensing electrodes (Rx_e), configured for generating a plurality of second intensity sensing signals (inSEN_e) based on the plurality of second capacitance sensing signals (cSEN_e).

7. The touch device according to claim 6, wherein the control circuit (21) comprises:
a first sensing controller (213b), electrically connected to the first sensing circuit (253a), configured for transforming the plurality of first intensity sensing signals (inSEN_o) to a first trigger position (trigPOS_o); and
a second sensing controller (215b), electrically connected to the second sensing circuit (253b), configured for transforming the plurality of second intensity sensing signals (inSEN_e) to a second trigger position (trigPOS_e).

8. The touch device according to claim 7, wherein the control circuit (21) further comprises:
a main controller (211), electrically connected to the first sensing controller (213b) and the second sensing controller (215b), configured for selectively generating the touchpoint coordinate (tpCoord) based on the first trigger position (trigPOS_o) and the second trigger position (trigPOS_e).

9. The touch device according to claim 8, wherein
when the first trigger position (trig_POS_o) and the second trigger position (trig_POS_e) are matched, the main controller (211) generates the touchpoint coordinate (tpCoord).

10. The touch device according to claim 8, wherein
when the first trigger position (trig_POS_o) is received but the second trigger position (trig_POS_e) is not received, the main controller (211) selectively generates the touchpoint coordinate (tpCoord) based on the first trigger position (trig_POS_o).

11. The touch device according to claim 10, wherein
the main controller (211) drops the first trigger position (trig_POS_o) if distribution of the plurality of first intensity sensing signals (inSEN_o) does not match a typical distribution pattern of a touch triggering event; or
the main controller (211) generates the touchpoint coordinate (tpCoord) based on the first trigger position (trig_POS_o) when the distribution of the plurality of first intensity sensing signals (inSEN_o) matches the typical distribution pattern of the touch triggering event.

12. The touch device according to claim 8, wherein
when the second trigger position (trig_POS_e) is received, but the first trigger position (trig_POS_o) is not received, the main controller (211) selectively generates the touchpoint coordinate (tpCoord) based on the second trigger position (trig_POS_e).

13. The touch device according to claim 12, wherein
the main controller (211) drops the second trigger position (trig_POS_e) if distribution of the plurality of second intensity sensing signals (inSEN_e) does not match a typical distribution pattern of a touch triggering event; or
the main controller (211) generates the touchpoint coordinate (tpCoord) based on the second trigger position (trig_POS_e) if the distribution of the plurality of second intensity sensing signals (inSEN_e) matches the typical distribution pattern of the touch triggering event.

14. The touch device according to claim 1, wherein the touch panel (20b) is a projected capacitance touch panel.

15. An associated control method applied to a touch device, wherein the touch device comprises a control circuit (21) and a touch panel comprising a plurality of first driving electrodes (Tx_o), a plurality of second driving electrodes (Tx_e), a plurality of first sensing electrodes (Rx_o), and a plurality of second sensing electrodes (Rx_e), wherein the control method comprises steps of:
conducting a plurality of first capacitance sensing signals (cSEN_o) to the control circuit (21), wherein the plurality of first capacitance sensing signals (cSEN_o) represent changes of a plurality of first capacitances (Cap_o) between the plurality of first driving electrodes (Tx_o) and the plurality of first sensing electrodes (Rx_o);
conducting a plurality of second capacitance sensing signals (cSEN_e) to the control circuit (21), wherein the plurality of second capacitance sensing signals (cSEN_e) represent changes of a plurality of second capacitances (Cap_e) between the plurality of second driving electrodes (Rx_e) and the plurality of second sensing electrodes (Rx_o); and
selectively generating a touchpoint coordinate (tpCoord) based on the plurality of first capacitance sensing signals (cSEN_o) and the plurality of second capacitance sensing signals (cSEN_e).
